# EUROPÄISCHE PATENTSCHRIFT

(11) **EP 3 032 170 B1**
(45) Veröffentlichungstag und Bekanntmachung des Hinweises auf die Patenterteilung: **20.05.2020**
(21) Anmeldenummer: 15197463.1
(22) Anmeldetag: 02.12.2015
(51) Int. Cl.: F21V 19/00, F16B 5/02, F16B 5/06, F16B 21/08, F21Y 103/10, F21Y 115/10

(54) **BEFESTIGUNGSVORRICHTUNG ZUR BEFESTIGUNG VON LED-MODULEN AN BEFESTIGUNGSSCHIENEN**
FIXING DEVICE FOR FIXING LED MODULES TO FIXING RAILS
DISPOSITIF DE FIXATION DESTINE A FIXER DES MODULES A DEL SUR DES RAILS DE FIXATION

(30) Priorität: 08.12.2014 DE 202014105918 U; 27.01.2015 DE 202015100352 U; 03.08.2015 DE 202015104043 U
(43) Veröffentlichungstag der Anmeldung: 15.06.2016
(73) Patentinhaber: Tridonic GmbH & Co. KG, 6850 Dornbirn (AT)
(72) Erfinder: Schrottenholzer, Jan, 6890 Lustenau (AT); Fink, Bernhard, 8333 Riegersburg (AT); Steiner, Manfred, 8271 Bad Waltersdorf (AT); Riemer, Steffen, 8564 Krottendorf-Gaisfeld (AT)
(74) Vertreter: Rupp, Christian

(56) Entgegenhaltungen:
- EP-A2- 2 295 844
- WO-A1-2014/072484
- DE-A1-102007 038 786
- DE-A1-102010 023 497
- DE-A1-102010 031 190
- DE-A1-102010 031 312
- DE-U1-202011 051 094
- US-A1- 2008 019 152
- US-A1- 2009 097 249
- US-B1- 6 502 968

## Beschreibung

Die Erfindung betrifft Befestigungsmittel zur Befestigung von LED-Modulen an Wänden und Decken.

Zur Befestigung von LED-Modulen sind Befestigungsschienen, welche an einer Wand oder Decke befestigt werden, bekannt. Die Befestigungsschienen sind dabei mit Befestigungsmitteln zur Aufnahme der LED-Module ausgestattet. Die Befestigungsschienen verfügen dabei über eine vorgegebene Breite. Lediglich hinsichtlich der Breite kompatible LED-Module können in die Befestigungsschienen eingesetzt werden. Beispielsweise existieren entsprechende Befestigungsschienen des Herstellers Trato, welche ausgeführt sind, um sog. F-Module des Herstellers Philips aufzunehmen. Nachteilig an diesem System ist, dass lediglich LED-Module der vorgegebenen Breite genutzt werden können.

Die DE 10 2010 031 190 A1 offenbart einen Leuchkörper mit LEDs, einer Platine und einem Kühlkörper, wobei eine Federvorrichtung vorgesehen ist, mittels derer die Platine in Einbaulage lose bleibend gegen eine Anlagefläche des Kühlkörpers gedrückt gehalten ist.

Die WO 2014/072484 A1 offenbart eine Haltestruktur für eine Leuchte. Ein Druckteil ist in eine Basis eingeschnappt, und eine plattenförmige Komponente ist zwischen der Basis und dem Druckteil vorgesehen.

Die US 6,502,968 offenbart eine Leiterplatte zur Aufnahme eines Trägers, der wiederum Lichtquellen umfasst.

Die DE 10 2010 023 497 A1 betrifft eine Beleuchtungseinheit umfassend ein Halteprofil, auf dem eine LED-Schiene mittels eines Halteteils befestigt ist.

Die EP 2 295 844 A2 offenbart eine Leuchte mit einem Leuchtenkörper, auf welchem ein Substrat mit einer Vielzahl darauf befestigter Leuchtdioden angeordnet ist. Das Substrat wird mit Hilfe von Druckelementen gehalten.

Die US 2009/0097249 A1 offenbart eine LED basierende Leuchte mit einer Leiterplatte, aufweisend mehrere seitlich von der Leiterplatte angeordnete Befestiger.

Die DE 10 2010 031 312 A1 offenbart ein Befestigungselement zum werkzeuglosen und wieder lösbaren Befestigen eines Lichtquellensubstrats an einer Auflage.

Die DE 10 2007 038 786 A1 offenbart eine Vorsatzlinse eines Leuchtmoduls zur Anordnung auf ein eine Halbleiterlichtquelle tragendes Trägerteil.

Die DE 20 2011 051 094 U1 offenbart eine Leuchteneinheit zum Einsatz in ein Leuchtengehäuse einer Leuchte.

Der Erfindung liegt die Aufgabe zugrunde, eine Vorrichtung zu schaffen, welche es ermöglicht LED-Module mit einer geringeren Breite als für die Befestigungsschiene vorgesehen, mit der Befestigungsschiene zu verbinden.

Die Aufgabe wird erfindungsgemäß für die Vorrichtung durch die Merkmale des unabhängigen Anspruchs 1 gelöst. Vorteilhafte Weiterbildungen sind Gegenstand der hierauf rückbezogenen Unteransprüche.

Eine erfindungsgemäße Befestigungsvorrichtung dient der Befestigung eines LED-Moduls an einer Befestigungsschiene.

Die Befestigungsvorrichtung verfügt über zumindest einen ersten Befestigungsbereich, welcher ausgebildet ist, um an der Befestigungsschiene befestigt zu werden. Die Befestigungsvorrichtung weist auf einer ersten Seite ein Positionierungsmittel auf, welches ausgebildet ist, um bei Befestigung des ersten Befestigungsbereich an der Befestigungsschiene, das LED-Modul zwischen der Befestigungsvorrichtung und der Befestigungsschiene zu halten. So ist es möglich, durch Nutzung der Befestigungsvorrichtung, LED-Module geringerer Breite als vorgesehen an der Befestigungsschiene zu befestigen.

Erfindungsgemäß verfügt dabei der erste Befestigungsbereich über eine Einkerbung auf der ersten Seite. Diese bildet das Positionierungsmittel und ist ausgebildet, um eine Kante des LED-Moduls zur Positionierung und Befestigung des LED-Moduls seitlich und drehsicher zu halten. So wird eine besonders sichere, insbesondere drehsichere, Halterung des LED-Moduls erreicht.

Die Befestigungsvorrichtung verfügt auf einer zweiten Seite, welche der erste Seite abgewandt ist, über zumindest ein Befestigungselement, welches ausgebildet ist, um eine Optik auf der zweiten Seite der Befestigungsvorrichtung zu befestigen. So ist es ohne Werkzeugeinsatz möglich, weiterhin eine Optik mit dem LED-Modul zu verbinden.

Vorzugsweise verfügt die Befestigungsvorrichtung auf der ersten Seite über ein Führungsmittel, bevorzugt eine Mehrzahl von Noppen, welches ausgebildet ist, um in Schraubkanäle der Befestigungsschiene einzugreifen. So wird eine weitere Erhöhung der Befestigungssicherheit und aus Ausrichtungssicherheit erreicht.

Bevorzugt ist die Befestigungsvorrichtung aus Kunststoff, bevorzugt einem elastischen Kunststoff, besonders bevorzugt einem Thermoplast oder einem Elastomer gefertigt. So ist eine besonders günstige und einfache Fertigung gewährleistet.

Bevorzugt verfügt dabei der erste Befestigungsbereich über ein Loch, welches ausgebildet ist, um mittels einer Schraube, bevorzugt einer Senkschraube an einem entsprechenden Schraubkanal der Befestigungsschiene befestigt zu werden. Alternativ verfügt der erste Befestigungsbereich auf der ersten Seite über einen Dorn, welcher ausgebildet ist, um in einen Schraubkanal der Befestigungsschiene einzugreifen, und den ersten Befestigungsbereich mit der Befestigungsschiene zu verbinden. So ist eine besonders flexible Montage gewährleistet.

Der Dorn verfügt bevorzugt über Spreizmittel, welche ausgebildet sind, um sich nach einem Hindurchtreten des Dorns durch den Schraubkanal zu verspreizen und ein erneutes Hindurchtreten des Dorns durch den Schraubkanal zu verhindern. So kann bei einer werkzeuglosen Montage eine sichere Verbindung gewährleitet werden.

Vorzugsweise verfügt die Befestigungsvorrichtung über einen zweiten Befestigungsbereich. Dieser ist ausgebildet, um an der Befestigungsschiene befestigt zu werden. Das Positionierungsmittel ist dabei ausgebildet, um bei Befestigung des zweiten Befestigungsbereichs an der Befestigungsschiene, das LED-Moduls zwischen der Befestigungsvorrichtung und der Befestigungsschiene zu halten. So wird eine besonders sichere Montage gewährleistet.

Bevorzugt verfügen der erste Befestigungsbereich und der zweite Befestigungsbereich über jeweils ein Loch, welches ausgebildet ist, um mittels Schrauben, bevorzugt Senkschrauben an entsprechenden Schraubkanälen der Befestigungsschiene befestigt zu werden. Die Löcher des ersten Befestigungsbereichs und des zweiten Befestigungsbereichs weisen dabei bevorzugt einen derartigen Abstand auf, um zu dem Zhaga-Standard konform zu sein. Alternativ weisen sie einen Abstand von 31mm auf. So ist es insbesondere möglich, LED-Module verschiedener Standards mit Befestigungsschienen verschiedener Standards zu verbinden.

Alternativ verfügen der erste Befestigungsbereich und der zweite Befestigungsbereich über jeweils einen Dorn, welcher ausgebildet ist, um in einen Schraubkanal der Befestigungsschiene einzugreifen, und den ersten Befestigungsbereich und den zweiten Befestigungsbereich mit der Befestigungsschiene zu verbinden. Die Dorne des ersten Befestigungsbereichs und des zweiten Befestigungsbereichs weisen dabei bevorzugt einen derartigen Abstand auf, um zu dem Zhaga-Standard konform zu sein. Alternativ weisen sie einen
Abstand von 31mm auf. So ist es insbesondere möglich, LED-Module verschiedener Standards mit Befestigungsschienen verschiedener Standards zu verbinden. Darüber hinaus kann eine werkzeuglose Montage erfolgen.

Vorzugsweise weist die Befestigungsvorrichtung eine erste Breite von einem äußeren Rand des ersten Befestigungsbereichs zu einem äußeren Rand des zweiten Befestigungsbereichs auf. Das LED-Modul verfügt dabei über eine zweite Breite, welche kleiner ist als die erste Breite. Die Befestigungsschiene verfügt dabei bevorzugt über eine dritte Breite, welche größer ist als die erste Breite. So wird sichergestellt, dass mit der Befestigungsvorrichtung LED-Module mit einer geringeren Breite als der Abstand zwischen den zwei Schraubkanälen der Befestigungsschiene mit der Befestigungsschiene verbunden werden können.

Vorzugsweise liegt die erste Breite zwischen 25mm und 40mm, bevorzugt zwischen 27mm und 37mm. Zusätzlich oder alternativ beträgt vorzugsweise die zweite Breite zwischen 15mm und 35 mm, bevorzugt zwischen 20mm und 30mm, besonders bevorzugt 24mm. Zusätzlich oder alternativ verfügt die Befestigungsschiene über eine Breite, welche zwischen 30mm und 50mm, bevorzugt zwischen 35mm und 45mm, und besonders bevorzugt 40mm beträgt. So kann eine flexible Verbindung verschiedener LED-Module mit verschiedenen Befestigungsschienen erfolgen.

Vorzugsweise sind dabei der erste Befestigungsbereich und der zweite Befestigungsbereich mittels eines Stegs verbunden. Der Steg ist dann ausgebildet, um das LED-Modul zu übergreifen und an der Befestigungsschiene zu halten. So wird eine weitere Erhöhung der Befestigungssicherheit gewährleistet.

Bevorzugt ist die Befestigungsvorrichtung dabei derart ausgebildet, dass der Steg bei Befestigung der Befestigungsvorrichtung an der Befestigungsschiene, in einem Zwischenraum zwischen zwei LED-Chips des LED-Moduls verläuft. Der Steg weist dabei eine Breite auf, welche geringer ist, als eine Breite des Zwischenraums zwischen zwei LED-Chips des LED-Moduls. So wird erreicht, dass durch die Befestigung mittels der Befestigungsvorrichtung, keine Veränderung der Lichtabstrahlung eintritt.

Vorzugsweise verfügt der Steg dabei über eine Breite von 0,5-5mm, bevorzugt von lmm-2mm. Zusätzlich oder alternativ ist der Steg dabei ausgebildet, dass er bei Befestigung der Befestigungsvorrichtung an der Befestigungsschiene nicht innerhalb eines Abstrahlwinkels der LED-Chips liegt. So wird weiter sichergestellt, dass durch die Befestigung des LED-Moduls mittels der Befestigungsvorrichtung keine Veränderungen der Lichtabstrahlung geschehen.

Ein erfindungsgemäßes Leuchtenmodul verfügt über eine Befestigungsschiene, ein LED-Modul und mindestens drei zuvor beschriebene Befestigungsvorrichtungen ohne Verbindungssteg. Die zumindest drei Befestigungsvorrichtungen sind dabei über eine Länge des LED-Moduls verteilt, abwechselnd auf zwei Seiten des LED-Moduls, bevorzugt nicht direkt gegenüber von einander, angeordnet. So ist eine besonders einfache Montage des LED-Moduls gewährleistet.

Ein alternatives erfindungsgemäßes Leuchtenmodul verfügt über eine Befestigungsschiene, ein LED-Modul und mindestens zwei zuvor beschriebene Befestigungsvorrichtungen mit Verbindungssteg. Die Befestigungsvorrichtung befestigt dabei das LED Modul an der Befestigungsschiene. So ist eine besonders sichere Montage des LED-Moduls gewährleistet.

Eine erfindungsgemäße Leuchte verfügt über eine Optik und ein zuvor beschriebenes Leuchtmodul. Die Optik beinhaltet dabei eine Diffusor und/oder eine Linse. So kann besonders flexibel mit verschiedenen Optiken auf verschiedene Beleuchtungssituationen reagiert werden.

Nachfolgend wird die Erfindung anhand der Zeichnungen, in deren vorteilhaftes Ausführungsbeispiel der Erfindung dargestellt ist, beispielhaft beschrieben. In der Zeichnung zeigen:
- Fig. 1: ein erstes Ausführungsbeispiel der erfindungsgemäßen Befestigungsvorrichtung während sie ein LED-Modul an einer Befestigungsschiene hält, in einer 3D-Ansicht;
- Fig. 2: ein zweites Ausführungsbeispiel der erfindungsgemäßen Befestigungsvorrichtung in einer Leuchte in einer Schnittansicht;
- Fig. 3: ein drittes Ausführungsbeispiel der erfindungsgemäßen Befestigungsvorrichtung in einer zweidimensionalen Ansicht von oben;
- Fig. 4: ein viertes Ausführungsbeispiel der erfindungsgemäßen Befestigungsvorrichtung in einer zweidimensionalen Ansicht entlang der Längsseite;
- Fig. 5: ein fünftes Ausführungsbeispiel der erfindungsgemäßen Befestigungsvorrichtung in einer zweidimensionalen Ansicht entlang der Querseite;
- Fig. 6: ein sechstes Ausführungsbeispiel der erfindungsgemäßen Befestigungsvorrichtung in einer zweidimensionalen Ansicht von unten;
- Fig. 7: ein siebtes Ausführungsbeispiel der erfindungsgemäßen Befestigungsvorrichtung in einer dreidimensionalen Ansicht von oben;
- Fig. 8: ein achtes Ausführungsbeispiel der erfindungsgemäßen Befestigungsvorrichtung in einer dreidimensionalen Ansicht von unten;
- Fig. 9: ein neuntes Ausführungsbeispiel der erfindungsgemäßen Befestigungsvorrichtung in einer dreidimensionalen Ansicht von oben;
- Fig. 10: ein zehntes Ausführungsbeispiel der erfindungsgemäßen Befestigungsvorrichtung in einer Leuchte in einer Schnittansicht;
- Fig. 11: ein elftes Ausführungsbeispiel der erfindungsgemäßen Befestigungsvorrichtung in einer dreidimensionalen Ansicht von oben;
- Fig. 12: ein zwölftes Ausführungsbeispiel der erfindungsgemäßen Befestigungsvorrichtung in einer dreidimensionalen Ansicht von unten;
- Fig. 13: eine exemplarische Befestigungsschiene in einer zweidimensionalen Ansicht von oben;
- Fig. 14: ein dreizehntes Ausführungsbeispiel der erfindungsgemäßen Befestigungsvorrichtung in einer zweidimensionalen Ansicht von oben, und
- Fig. 15: ein vierzehntes Ausführungsbeispiel der erfindungsgemäßen Befestigungsvorrichtung in einer Leuchte in einer Schnittansicht.

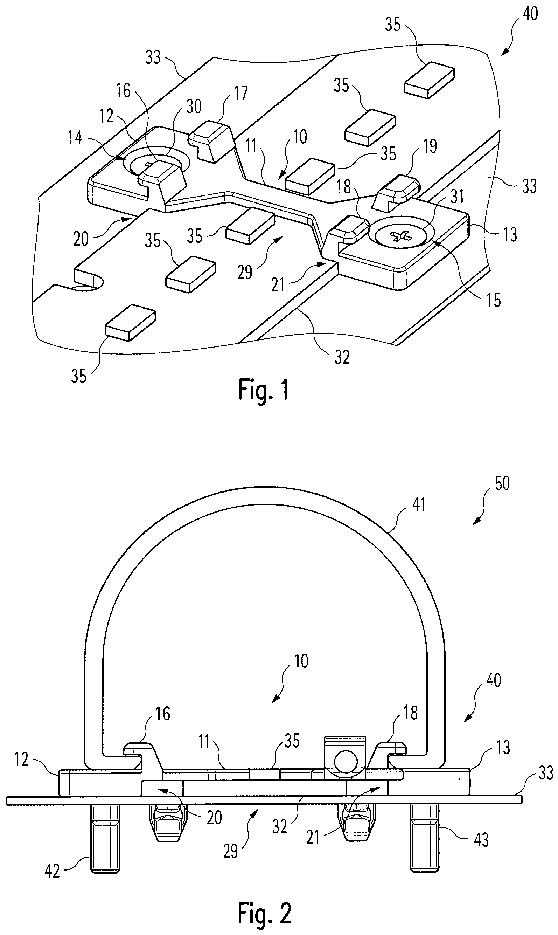

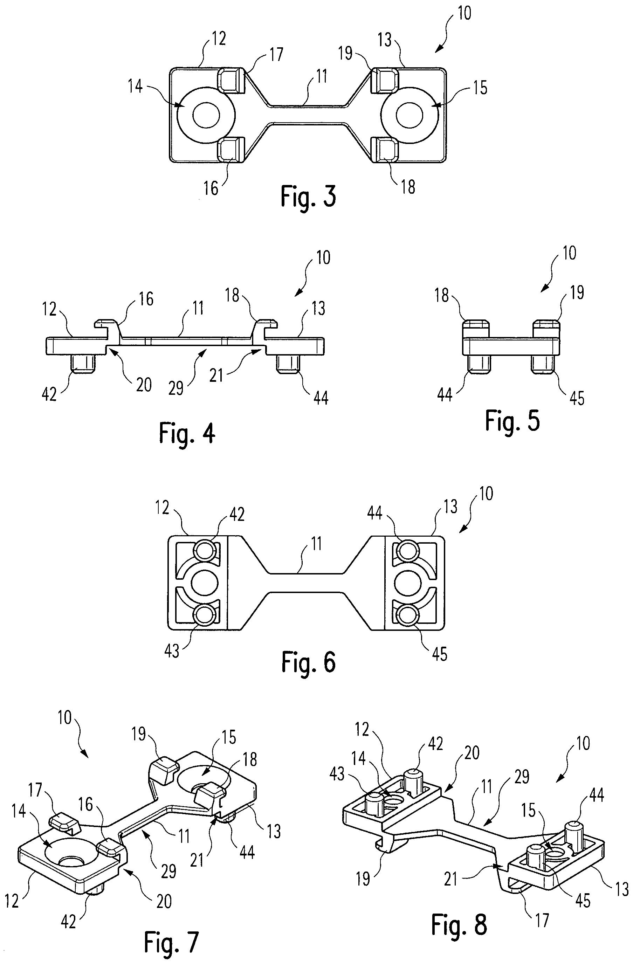

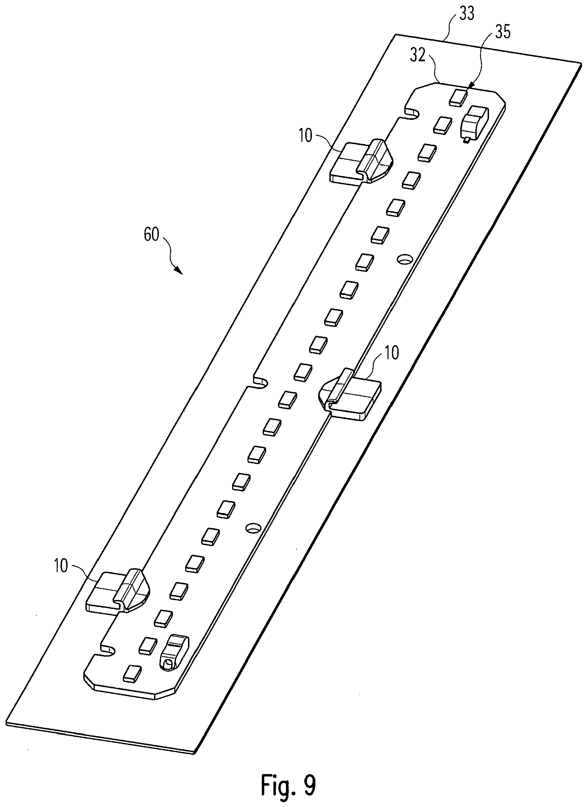

Zunächst wird anhand der Fig. 1 und 2 auf den Aufbau und die Funktionsweise verschiedener Ausführungsbeispiele der erfindungsgemäßen Befestigungsvorrichtung eines ersten Typs eingegangen. Anschließend wird anhand von Fig. 3 - 8 auf Konstruktionsdetails verschiedener Ausführungsbeispiele des ersten Typs eingegangen. Daraufhin wird anhand von Fig. 9 - 15 auf Konstruktionsdetails verschiedener Ausführungsbeispiele der erfindungsgemäßen Befestigungsvorrichtung eines zweiten Typs eingegangen. Identische Elemente wurden in ähnlichen Abbildungen zum Teil nicht wiederholt dargestellt und beschrieben.

In Fig. 1 ist ein erstes Ausführungsbeispiel der erfindungsgemäßen Befestigungsvorrichtung 10 gezeigt. Die Befestigungsvorrichtung 10 besteht dabei aus einem ersten Befestigungsbereich 12 und einem zweiten Befestigungsbereich 13. Die beiden Befestigungsbereiche 12, 13 sind mittels eines Stegs 11 miteinander verbunden. Die Befestigungsvorrichtung 10 ist dabei ausgebildet, um ein LED-Modul 32 an einer Befestigungsschiene 33 zu befestigen. Dazu weist die Befestigungsvorrichtung 10 Löcher 14, 15 auf, durch welche Schrauben 30, 31 in die Befestigungsschiene 33 geschraubt werden können. Dadurch wird die Befestigungsvorrichtung 10 an der Befestigungsschiene 33 befestigt, wodurch das LED-Modul 32 zwischen der Befestigungsvorrichtung 10 und der Befestigungsschiene 33 gehalten wird.

Die Löcher 14, 15 der Befestigungsvorrichtung 10 sind dabei in einem derartigen Abstand zueinander angeordnet, dass sie zu dem ZHAGA-Standard konform sind. Insbesondere weisen sie einen Abstand von 31mm von Mittelpunkt zu Mittelpunkt auf. So wird erreicht, dass LED-Module 10, welche schmäler sind als für den ZHAGA -Standard vorgesehen, auf Befestigungsschienen 33 gemäß dem ZHAGA - Standard befestigt werden können.

Um das LED-Modul 32 besonders sicher in Position zu halten, verfügt die Befestigungsvorrichtung 10 über ein Positionierungsmittel 29 zur Positionierung und Befestigung des LED-Moduls 32. Das Positionierungsmittel 29 beinhaltet dabei vorzugsweise parallele Einkerbungen 20, 21 des ersten Befestigungsbereichs 12 und des zweiten Befestigungsbereichs 13 auf einer ersten Seite, welche dem LED-Modul 32 und der Befestigungsschiene 33 zugewandt ist. Die parallelen Einkerbungen 20, 21 sind so ausgebildet, dass sie jeweils eine Kante des LED-Moduls auf zwei Seiten umfassen und so das LED-Modul 10 in Position halten. Darüberhinaus wird das LED-Modul 32 von dem Steg 11 fixiert, indem der Steg 11, gehalten von dem ersten Befestigungsbereich 12 und dem zweiten Befestigungsbereich 13 gegen das LED-Modul 32 gepresst wird, und so das LED-Modul 32 gegen die Befestigungsschiene 33 gepresst wird.

Der Steg 11 ist dabei hinreichend schmal ausgeführt, dass er zwischen zwei LED-Chips 35 des LED-Moduls 32 verläuft, ohne einen LED-Chip 35 abzudecken oder in den Strahlengang zu ragen. So wird erreicht, dass die Lichtabstrahlung des LED-Moduls durch die Befestigung mittels der Befestigungsvorrichtung 10 nicht beeinflusst wird. Der Steg verfügt dabei vorzugsweise über eine Breite von 0,5-5mm, besonders bevorzugt von 1mm-2mm.

Die Befestigungsvorrichtung 10 weist dabei von einem äußeren Rand des ersten Befestigungsbereichs zu einem äußeren Rand des zweiten Befestigungsbereichs eine erste Breite auf, welche größer ist als eine zweite Breite des LED-Moduls 32, jedoch kleiner ist als eine dritte Breite der Befestigungsschiene 33.

Die Befestigungsvorrichtung weist dabei eine Breite von 25-40mm, bevorzugt 27-37mm auf. Die zweite Breite beträgt zwischen 15 und 35mm, bevorzugt zwischen 20 und 30mm und beträgt besonders bevorzugt 24mm. Die Befestigungsschiene weist eine Breite von 30-59mm, bevorzugt zwischen 35 und 45mm, besonders bevorzugt von 40mm auf.

Auf einer zweiten Seite der Befestigungsvorrichtung 10, welche der ersten Seite abgewandt ist, und somit dem LED-Modul 32 und der Befestigungsschiene 33 abgewandt ist, verfügt die Befestigungsvorrichtung 10 über zumindest ein Befestigungselement 16 - 19, welches ausgebildet ist, um eine Optik aufzunehmen und zu befestigen. Die Optik kann dadurch oberhalb des LED-Moduls 32 angebracht werden. Vorzugsweise sind die Befestigungselemente 16 - 19 ausgebildet, so dass die Optik werkzeuglos montiert und demontiert werden kann. Eine solche Optik ist in Fig. 2 näher dargestellt.

Vorzugsweise verfügt die Befestigungsvorrichtung 10 darüber hinaus auf der ersten Seite, d.h. auf der, dem LED-Modul 32 und der Befestigungsschiene 33 zugewandten Seite über ein Führungsmittel, bevorzugt eine Mehrzahl von Noppen, welches ausgebildet ist, um in die Schraubkanäle der Befestigungsschiene einzugreifen und so die Befestigungsvorrichtung 10 besonders verdrehsicher auf der Befestigungsschiene 33 zu verankern.

Die Befestigungsvorrichtung 10 ist dabei vorzugsweise aus einem Kunststoff, insbesondere einem elastischen Kunststoff gefertigt. Dies kann z.B. ein Thermoplast oder ein Elastomer sein.

In dem hier dargestellten Ausführungsbeispiel ist die Befestigungsvorrichtung als Teil eines Leuchtenmoduls 40 dargestellt. Das Leuchtenmodul 40 beinhaltet eine Befestigungsschiene 33, eine LED-Modul 32 und mindestens zwei bereits beschriebene Befestigungsvorrichtung 10.

In Fig. 2 ist ein zweites Ausführungsbeispiel der erfindungsgemäßen Befestigungsvorrichtung 10 als Teil eines Leuchtenmoduls 40 dargestellt. Die Ansicht von Fig. 2 ist eine Schnittansicht. Deutlich erkennbar ist hier eine Optik 41, welche mittels der Befestigungselemente 16 - 19 an der Befestigungsvorrichtung 10 befestigt ist. Die Optik 41 beinhaltet dabei z.B. eine Linse oder einen Diffusor. Hier handelt es sich bei der Optik 41 über einen längs entlang des LED-Moduls 32 erstreckten Diffusor.

Deutlich erkennbar sind in dem in Fig. 2 dargestellten Ausführungsbeispiel darüber hinaus die Noppen 42, 43, welche das zuvor beschriebene Führungsmittel bilden und in die Schraubkanäle der Befestigungsschiene 33 eingreifen, erkennbar. In dem hier dargestellten Ausführungsbeispiel treten die Noppen 42, 43 durch die Befestigungsschiene 33 hindurch.

In Fig. 3 ist ein weiteres Ausführungsbeispiel der erfindungsgemäßen Befestigungsvorrichtung 10 gezeigt. Dieses Ausführungsbeispiel zeigt eine Draufsicht von der zweiten Seite aus.

In Fig. 4 ist ein weiteres Ausführungsbeispiel der erfindungsgemäßen Befestigungsvorrichtung 10 gezeigt. Diese Figur zeigt eine Seitenansicht der Befestigungsvorrichtung 10, wobei die erste Seite unten und die zweite Seite oben dargestellt ist. Hier sind insbesondere das Positionierungsmittel 29 und die zugehörigen parallelen Einkerbungen 20, 21 gezeigt. Auch sind hier die Noppen 42, 44, welche auf der ersten Seite der Befestigungsvorrichtung 10 angeordnet sind, deutlich erkennbar.

In Fig. 5 ist ein weiteres Ausführungsbeispiel der erfindungsgemäßen Befestigungsvorrichtung 10 gezeigt. Hier ist eine Seitenansicht entlang der Querseite gezeigt. Auch hier ist die erste Seite unten und die zweite Seite oben dargestellt. Hier sind insbesondere die Noppen 44, 45 und die Befestigungselemente 18, 19 klar erkennbar.

In Fig. 6 ist ein weiteres Ausführungsbeispiel der erfindungsgemäßen Befestigungsvorrichtung 10 gezeigt. Hier ist eine Ansicht von unten, d.h. aus Richtung der ersten Seite gezeigt. Insbesondere sind hier die Noppen 42-45 deutlich erkennbar.

In Fig. 7 ist ein weiteres Ausführungsbeispiel der erfindungsgemäßen Befestigungsvorrichtung 10 gezeigt. Hier ist eine dreidimensionale Ansicht von schräg oben dargestellt. Insbesondere sind hier die Löcher 14, 15 für die in Fig. 1 dargestellten Schrauben 30, 31 sehr gut erkennbar.

In Fig. 8 ist ein weiteres Ausführungsbeispiel der erfindungsgemäßen Befestigungsvorrichtung 10 gezeigt. Hier ist eine dreidimensionale Ansicht von schräg unten dargestellt. Hier sind insbesondere die Noppen 42-44 gut erkennbar.

In Fig. 9 ist ein weiteres Ausführungsbeispiel der erfindungsgemäßen Befestigungsvorrichtung 10 gezeigt. Hier sind mehrere Befestigungsvorrichtungen 10 gezeigt, während sie ein LED-Modul 32 auf einer Befestigungsschiene 33 halten. Das LED-Modul 32 beinhaltet dabei eine Mehrzahl an Leuchtmitteln 35. Hier dargestellt ist ein Leuchtenmodul 60 gebildet durch die Befestigungsschiene 33, das LED-Modul 32 und die Befestigungsvorrichtungen 10.

In dem hier dargestellten Ausführungsbeispiel sind mehrere einzelne Befestigungsvorrichtungen 10 gezeigt, welche jeweils einen einzelnen Befestigungsbereich aufweisen.

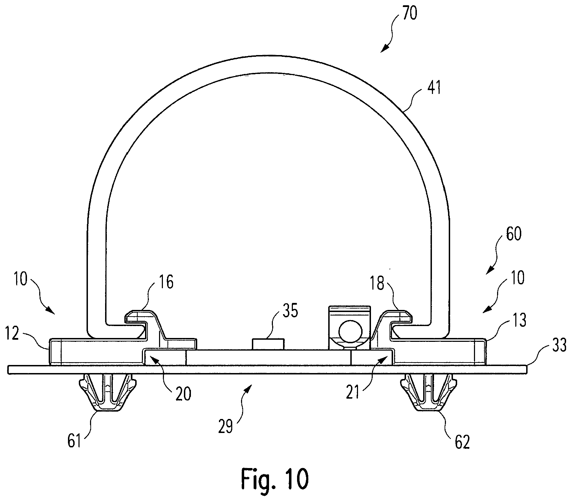

Die Befestigungsvorrichtungen 10 halten hier einzeln jeweils von einer Seite das LED-Modul 32 an der Befestigungsschiene 33. Sie sind dabei einzeln an der Befestigungsschiene 33 befestigt. Eine solche Befestigung kann wie an der früher dargestellten Ausführungsbeispielen mittels einer Schraube durch ein Loch der Befestigungsvorrichtung 10 erfolgen. Alternativ ist eine Befestigung mittels eines Dorns, welcher durch ein Loch bzw. einen Schraubkanal der Befestigungsschiene 33 ragt, möglich. Hierauf wird insbesondere in Fig. 10 - 12 und 15 näher eingegangen. Durch die abwechselnde Platzierung der Befestigungsvorrichtungen 10 auf gegenüberliegenden Seiten des LED-Moduls 32 wird bei einerseits sparsamen Einsatz von Befestigungsvorrichtungen 10 eine sichere Montage des LED-Moduls 32 auf der Befestigungsschiene 33 erreicht.

In Fig. 10 ist ein weiteres Ausführungsbeispiel des erfindungsgemäßen Leuchtenmoduls 60 in einer Leuchte 70 gezeigt. In dem hier dargestellten Ausführungsbeispiel ist eine einzige Befestigungsvorrichtung 10 gezeigt, welche über zwei Befestigungsbereiche 12, 13 verfügt. Die Leuchte 70 beinhaltet eine Optik 41, welche gehalten durch Befestigungselemente 16, 18 mit dem Leuchtenmodul 60 verbunden ist. Deutlich erkennbar ist hier, dass die Befestigungsvorrichtung 10 in ihren beiden Befestigungsbereichen 12, 13 jeweils über einen Dorn 61, 62 verfügt, welcher durch ein Loch in der Befestigungsschiene 33 ragt und die Befestigungsvorrichtung 10 auf der Befestigungsschiene 33 fixiert. Wie zuvor beschrieben, beinhaltet das Positionierungsmittel 29 hier jeweils eine Einkerbung 20, 21 der Befestigungsvorrichtung 10 im ersten Befestigungsbereich 12 und im zweiten Befestigungsbereich 13.

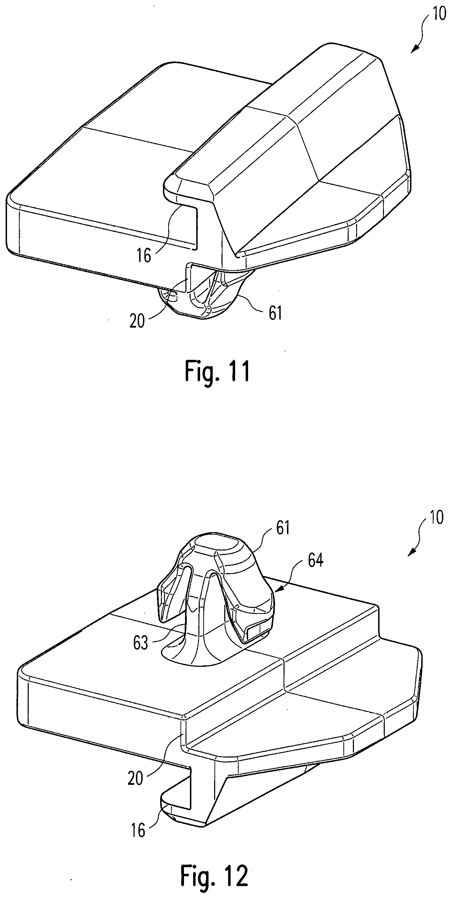

In Fig. 11 ist ein weiteres Ausführungsbeispiels der erfindungsgemäßen Befestigungsvorrichtung 10 in einer Detailansicht von oben gezeigt. Insbesondere sind hier das Befestigungsmittel 16 und die Einkerbung 20 erkennbar.

Darüber hinaus ist der Dorn 61, welcher der Halterung des Befestigungsmittels 10 an der Befestigungsschiene 33 dient, dargestellt.

In Fig. 12 ist ein weiteres Ausführungsbeispiel der erfindungsgemäßen Befestigungsvorrichtung 10 in einer Detailansicht von unten dargestellt. Insbesondere deutlich erkennbar ist hier der Dorn 61 zur Befestigung der Befestigungsvorrichtung 10 an der Befestigungsschiene 33. Der Dorn 61 beinhaltet hier einen Hals 63 und Spreizmittel 64. Der Hals 63 weist eine deutlich geringere Breite auf als die Spreizmittel 64. Wird der Dorn 61 durch ein Loch oder einen Schraubkanal der Befestigungsschiene 33 geführt so werden die Spreizmittel 64 in Richtung des Halses 63 gebogen. Sobald die Spreizmittel 64 durch das Loch bzw. durch den Schraubkanal hindurch getreten sind und nicht länger von dem Loch bzw. Schraubkanal in Richtung des Halses 63 gebogen werden, federn die Spreizmittel 64 elastisch zurück in ihre Ausgangsposition und verspreizen dadurch den Dorn 61 gegen ein Herausziehen aus dem Loch bzw. dem Schraubkanal. Hierzu ist die Befestigungsvorrichtung 10, insbesondere der Dorn 61, aus einem zumindest teilweise elastisch verformbarem Material gefertigt.

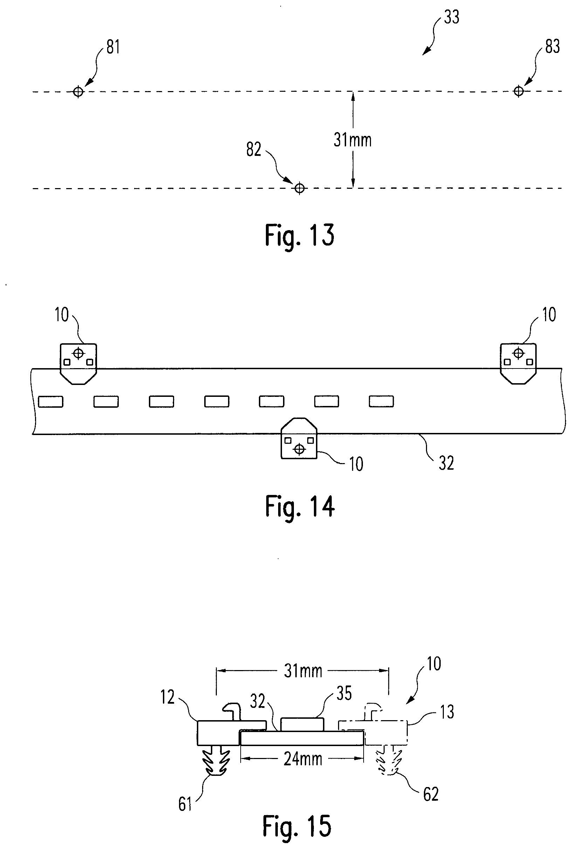

In Fig. 13 ist ein Schema einer exemplarischen Befestigungsschiene 33 gezeigt. Insbesondere sind die Positionen von Löchern 81, 82 und 83 gezeigt. Diese Positionen entsprechen standardisierten Positionen. Bei den Löchern 81, 82, 83 kann es sich auch um Schraubkanäle 81, 82, 83 handeln.

In Fig. 14 ist einer Draufsicht ein weiteres Ausführungsbeispiel der erfindungsgemäßen Befestigungsvorrichtung 10 gezeigt. Die Befestigungsvorrichtungen 10 sind dabei jeweils oberhalb eines der Löcher 81, 82 und 83 aus Fig. 13 angebracht und befestigen ein LED-Modul 32.

In Fig. 15 ist eine Schnittansicht eines Ausführungsbeispiels der erfindungsgemäßen Befestigungsvorrichtung 10 gezeigt. Hier sind die typischen Größenverhältnisse und Abstände eingezeichnet. So liegt zwischen den Dornen 61, 62 ein Abstand von 31 mm. Das LED-Modul 32 weist eine Breite von 24 mm auf.

Obwohl in den verschiedenen Figuren unterschiedliche Ausführungsbeispiele dargestellt sind, wurden identische Bezugszeichen für einander entsprechende Elemente genutzt. Die Erfindung ist nicht auf das dargestellte Ausführungsbeispiel beschränkt. So können die verschiedenen Befestigungsarten wie auch die die verschiedenen dargestellten Arten der Befestigungsvorrichtung unterschiedlich kombiniert werden. Die vorstehend beschriebenen Merkmale oder in den Figuren gezeigten Merkmale sind im Rahmen der Erfindung beliebig vorteilhaft miteinander kombinierbar.

## Patentansprüche

1. Befestigungsvorrichtung (10) zur Befestigung eines LED-Moduls (32) an einer Befestigungsschiene (33), mit zumindest einem ersten Befestigungsbereich (12), welcher ausgebildet ist, um an der Befestigungsschiene (33) befestigt zu werden, wobei die Befestigungsvorrichtung (10) auf einer ersten Seite ein Positionierungsmittel (29) aufweist, welches ausgebildet ist, um bei Befestigung des zumindest ersten Befestigungsbereichs (12) an der Befestigungsschiene (33), das LED-Modul (32) zwischen der Befestigungsvorrichtung (10) und der Befestigungsschiene (33) zu halten, **dadurch gekennzeichnet, dass** die Befestigungsvorrichtung (10) auf einer zweiten Seite, welche der ersten Seite abgewandt ist, über zumindest ein Befestigungselement (16, 17, 18, 19) verfügt, welches ausgebildet ist, um eine Optik (41) auf der zweiten Seite der Befestigungsvorrichtung (10) zu befestigen,
wobei der zumindest erste Befestigungsbereich (12) über eine Einkerbung (20, 21) auf der ersten Seite verfügt, welche das Positionierungsmittel (29) bildet und ausgebildet ist, um eine Kante des LED-Moduls (32) zur Positionierung und Befestigung des LED-Moduls (32) seitlich und drehsicher zu halten.

2. Befestigungsvorrichtung (10) nach Anspruch 1,
wobei die Befestigungsvorrichtung (10) auf der ersten Seite Führungsmittel (42, 43, 44, 45), bevorzugt eine Mehrzahl von Noppen (42, 43, 44,45), aufweist, welches ausgebildet ist, um in zumindest eine Führungsschiene der Befestigungsschiene (33) einzugreifen.

3. Befestigungsvorrichtung (10) nach Anspruch 1 oder 2, wobei die Befestigungsvorrichtung (10) aus Kunststoff, bevorzugt aus einem elastischen Kunststoff, besonders bevorzugt aus einem Thermoplast oder einem Elastomer besteht.

4. Befestigungsvorrichtung (10) nach einem der Ansprüche 1 bis 3,
wobei der erste Befestigungsbereich (12) über ein Loch (14, 15) verfügt, welches ausgebildet ist, um mittels einer Schraube (30), bevorzugt einer Senkschraube (30) an einem entsprechenden Schraubkanal der Befestigungsschiene (33) befestigt zu werden, oder
wobei der erste Befestigungsbereich (12) auf der ersten Seite über einen Dorn (61) verfügt, welcher ausgebildet ist, um in einen Schraubkanal (81, 82, 83) der Befestigungsschiene (33) einzugreifen, und den ersten Befestigungsbereich (12) mit der Befestigungsschiene (33) zu verbinden.

5. Befestigungsvorrichtung (10) nach Anspruch 4,
wobei der Dorn (61) über Spreizmittel (64) verfügt, welche ausgebildet sind, um sich nach einem Hindurchtreten des Dorns (61) durch das den Schraubkanal zu verspreizen und ein erneutes Hindurchtreten des Dorns (61) durch den Schraubkanal (81, 82, 83) zu verhindern.

6. Befestigungsvorrichtung (10) nach einem der Ansprüche 1 bis 5,
wobei die Befestigungsvorrichtung über einen zweiten Befestigungsbereich (13) verfügt, welcher ausgebildet ist, um an der Befestigungsschiene (33) befestigt zu werden,
wobei das Positionierungsmittel (29) ausgebildet ist, um bei Befestigung des zweiten Befestigungsbereichs (13) an der Befestigungsschiene (33), das LED-Moduls (32) zwischen der Befestigungsvorrichtung (10) und der Befestigungsschiene (33) zu halten.

7. Befestigungsvorrichtung (10) nach Anspruch 6,
wobei der erste Befestigungsbereich (12) und der zweite Befestigungsbereich (13) über jeweils ein Loch (14, 15) verfügen, welches ausgebildet ist, um mittels Schrauben (30, 31), bevorzugt Senkschrauben (30, 31) an entsprechenden Schraubkanälen der Befestigungsschiene (33) befestigt zu werden, und
wobei die Löcher (14, 15) des ersten Befestigungsbereichs (12) und des zweiten Befestigungsbereichs (13) bevorzugt einen derartigen Abstand aufweisen, um zu dem Zhaga-Standard konform zu sein, und/oder
wobei die Löcher (14, 15) bevorzugt über einen Abstand von 31mm verfügen.

8. Befestigungsvorrichtung (10) nach Anspruch 6,
wobei der erste Befestigungsbereich (12) und der zweite Befestigungsbereich (13) über jeweils einen Dorn (61, 62) verfügen, welcher ausgebildet ist, um in einen Schraubkanal (81, 82, 83) der Befestigungsschiene (33) einzugreifen, und den ersten Befestigungsbereich (12) und den zweiten Befestigungsbereich (13) mit der Befestigungsschiene (33) zu verbinden, und
wobei die Dorne des ersten Befestigungsbereichs (12) und des zweiten Befestigungsbereichs (13) bevorzugt einen derartigen Abstand aufweisen, um zu dem Zhaga-Standard konform zu sein, und/oder
wobei die Dorne (61, 62) bevorzugt über einen Abstand von 31mm verfügen.

9. Befestigungsvorrichtung (10) nach einem der Ansprüche 6 bis 8,
wobei die Befestigungsvorrichtung (10) eine erste Breite von einem äußeren Rand des ersten Befestigungsbereichs (12) zu einem äußeren Rand des zweiten Befestigungsbereichs (13) aufweist, wobei das LED-Modul (32) eine zweite Breite aufweist,
wobei die erste Breite größer ist als die zweite Breite, und
wobei die Befestigungsschiene (33) bevorzugt eine dritte Breite aufweist, welche größer ist als die erste Breite.

10. Befestigungsvorrichtung (10) nach Anspruch 9,
wobei die erste Breite zwischen 25mm und 40 mm, bevorzugt zwischen 27 mm und 37mm beträgt, und/oder
wobei die zweite Breite zwischen 15mm und 35mm, bevorzugt zwischen 20mm und 30mm, besonders bevorzugt 24mm beträgt,
und/oder
wobei die Befestigungsschiene (33) eine Breite aufweist, welche zwischen 30mm und 50mm, bevorzugt zwischen 35mm und 45mm, besonders bevorzugt 40mm beträgt.

11. Befestigungsvorrichtung (10) nach einem der Ansprüche 6 bis 10,
wobei der erste Befestigungsbereich (12) und der zweite Befestigungsbereich (13) mittels eines Stegs (11) verbunden sind, und wobei der Steg (11) ausgebildet ist, um das LED-Modul (32) zu übergreifen und an der Befestigungsschiene (33) zu halten.

12. Befestigungsvorrichtung (10) nach Anspruch 11,
wobei die Befestigungsvorrichtung (10) derart ausgebildet ist, dass der Steg (11) bei Befestigung der Befestigungsvorrichtung (10) an der Befestigungsschiene (33), in einem Zwischenraum zwischen LED-Chips (35) des LED-Moduls (32) verläuft, wobei der Steg (11) eine Breite aufweist, welche geringer ist als eine Breite des Zwischenraums zwischen LED-Chips (35) des LED-Moduls (32), und/oder
wobei der Steg (11) eine Breite von 0,5mm bis 5mm, bevorzugt von 1mm bis 2mm verfügt, und/oder
wobei der Steg (11) derart ausgebildet ist, dass er bei Befestigung der Befestigungsvorrichtung (10) an der Befestigungsschiene (33), nicht innerhalb eines Abstrahlwinkels der LED-Chips (35) liegt.

13. Leuchtenmodul (60) mit einer Befestigungsschiene (33), einem LED-Modul (32) und mindestens drei Befestigungsvorrichtungen (10) nach einem der Ansprüche 1 bis 5 verfügt, und
wobei die zumindest drei Befestigungsvorrichtungen (10) über eine Länge des LED-Moduls verteilt, abwechselnd auf zwei Seiten des LED-Moduls, bevorzugt nicht direkt gegenüber von einander, angeordnet sind.

14. Leuchtenmodul (40) mit einer Befestigungsschiene (33), einem LED-Modul (32) und mindestens zwei Befestigungsvorrichtungen (10) nach Anspruch 10 oder 11, wobei die Befestigungsvorrichtungen (10) das LED-Modul (32) an der Befestigungsschiene (33) befestigen.

15. Leuchte (50, 70) mit einer Optik (41) und einem Leuchtenmodul (40, 60) gemäß Anspruch 13 oder 14 mit zumindest einer Befestigungsvorrichtung (10) nach Anspruch 1, wobei die Optik (41) einen Diffusor und/oder eine Linse beinhaltet.

## Claims

1. Mounting device (10) for mounting an LED module (32) on a mounting rail (33), having at least one first mounting region (12) which is configured to be mounted on the mounting rail (33), wherein, on a first side, the mounting device (10) comprises a positioning means (29) which is configured to hold the LED module (32) between the mounting device (10) and the mounting rail (33) when the at least first mounting region (12) is mounted on the mounting rail (33), **characterized in that**, on a second side which faces away from the first side, the mounting device (10) has at least one mounting element (16, 17, 18, 19), which is configured to mount optics (41) on the second side of the mounting device (10),
wherein, on the first side, the at least first mounting region (12) has a notch (20, 21), which forms the positioning means (29) and is configured to laterally and non-rotatably hold an edge of the LED module (32) for positioning and mounting the LED module (32) .

2. Mounting device (10) according to Claim 1,
wherein, on the first side, the mounting device (10) comprises guide means (42, 43, 44, 45), preferably a plurality of knobs (42, 43, 44, 45), which are configured to engage in at least one guide rail of the mounting rail (33).

3. Mounting device (10) according to Claim 1 or 2, wherein the mounting device (10) is made of plastic, preferably an elastic plastic, particularly preferably a thermoplastic or elastomer.

4. Mounting device (10) according to any of the Claims 1 to 3,
wherein the first mounting region (12) has a hole (14, 15), which is configured to be mounted to a corresponding screw channel of the mounting rail (33) by means of a screw (30), preferably a countersunk screw (30), or
wherein, on the first side, the first mounting region (12) has a mandrel (61), which is configured to engage in a screw channel (81, 82, 83) of the mounting rail (33) and connect the first mounting region (12) to the mounting rail (33).

5. Mounting device (10) according to Claim 4,
wherein the mandrel (61) has spreading means (64), which are configured to spread after the mandrel (61) has passed through the screw channel and prevent a renewed passage of the mandrel (61) through the screw channel (81, 82, 83).

6. Mounting device (10) according to any of the Claims 1 to 5,
wherein the mounting device has a second mounting region (13), which is configured to be mounted to the mounting rail (33), wherein the positioning means (29) is configured to hold the LED module (32) between the mounting device (10) and the mounting rail (33) when the second mounting region (13) is mounted on the mounting rail (33).

7. Mounting device (10) according to Claim 6,
wherein the first mounting region (12) and the second mounting region (13) each have a hole (14, 15), which are configured to be mounted to corresponding screw channels of the mounting rail (33) by means of screws (30, 31), preferably countersunk screws (30, 31), and
wherein the holes (14, 15) of the first mounting region (12) and the second mounting region (13) are preferably spaced such that they are in conformity with the Zhaga standard, and/or
wherein the holes (14, 15) preferably have a spacing of 31 mm.

8. Mounting device (10) according to Claim 6,
wherein the first mounting region (12) and the second mounting region (13) each have a mandrel (61, 62), which is configured to engage in a screw channel (81, 82, 83) of the mounting rail (33) and connect the first mounting region (12) and the second mounting region (13) to the mounting rail (33), and
wherein the mandrels of the first mounting region (12) and the second mounting region (13) are preferably spaced such that they are in conformity with the Zhaga standard, and/or
wherein the mandrels (61, 62) preferably have a spacing of 31 mm.

9. Mounting device (10) according to any of the Claims 6 to 8,
wherein the mounting device (10) has a first width from an outer edge of the first mounting region (12) to an outer edge of the second mounting region (13), wherein the LED module (32) has a second width,
wherein the first width is greater than the second width, and wherein the mounting rail (33) preferably has a third width, which is greater than the first width.

10. Mounting device (10) according to Claim 9,
wherein the first width is between 25 mm and 40 mm, preferably between 27 mm and 37 mm, and/or
wherein the second width is between 15 mm and 35 mm, preferably between 20 mm and 30 mm, particularly preferably 24 mm,
and/or
wherein the mounting rail (33) has a width, which is preferably between 30 mm and 50 mm, preferably between 35 mm and 45 mm, particularly preferably 40 mm.

11. Mounting device (10) according to any of the Claims 6 to 10,
wherein the first mounting region (12) and the second mounting region (13) are connected by means of a web (11), and wherein the web (11) is configured to overlap the LED module (32) and hold it on the mounting rail (33).

12. Mounting device (10) according to Claim 11,
wherein the mounting device (10) is configured such that, when the mounting device (10) is mounted to the mounting rail (33), the web (n) extends in a gap between LED chips (35) of the LED module (32), wherein the web (11) has a width that is less than a width of the gap between LED chips (35) of the LED module (32), and/or
wherein the web (11) has a width of 0.5 mm to 5 mm, preferably 1 mm to 2 mm, and/or
wherein the web (11) is configured such that it is not within a beam angle of the LED chips (35) when the mounting device (10) is mounted to the mounting rail (33).

13. Lighting module (60) having a mounting rail (33), an LED module (32) and at least three mounting devices (10) according to any of the Claims 1 to 5, and
wherein the at least three mounting devices (10) are distributed over a length of the LED module and disposed alternately on two sides of the LED module, preferably not directly opposite one another.

14. Lighting module (40) comprising a mounting rail (33), an LED module (32) and at least two mounting devices (10) according to Claim 10 or 11, wherein the mounting devices (10) mount the LED module (32) on the mounting rail (33).

15. Lamp (50, 70) comprising optics (41) and a lighting module (40, 60) according to Claim 13 or 14, comprising at least one mounting device (10) according to Claim 1, wherein the optics (41) include a diffuser and/or a lens.

## Revendications

1. Dispositif de fixation (10) destiné à fixer un module à DEL (32) sur un rail de fixation (33) et comprenant au moins une première zone de fixation (12) conçue pour être fixée au rail de fixation (33), ledit dispositif de fixation (10) présentant, sur un premier côté, un moyen de positionnement (29) conçu pour maintenir, lors de la fixation de l'au moins une première zone de fixation (12) sur le rail de fixation (33), le module à DEL (32) entre le dispositif de fixation (10) et le rail de fixation (33) ; **caractérisé en ce que** le dispositif de fixation (10) dispose, sur un deuxième côté opposé au premier côté, d'au moins un élément de fixation (16, 17, 18, 19) conçu pour fixer une optique (41) sur le deuxième côté du dispositif de fixation (10),
l'au moins une première zone de fixation (12) disposant, sur le premier côté, d'une entaille (20, 21) formant le moyen de positionnement (29) et conçue pour maintenir un bord du module à DEL (32) pour effectuer le positionnement et la fixation du module à DEL (32) sur les côtés, de manière bloquée en rotation.

2. Dispositif de fixation (10) selon la revendication 1,
dans lequel le dispositif de fixation (10) présente, sur le premier côté, un moyen de guidage (42, 43, 44, 45), de préférence une pluralité de picots (42, 43, 44, 45), qui est conçu pour s'insérer dans au moins un rail de guidage du rail de fixation (33).

3. Dispositif de fixation (10) selon la revendication 1 ou 2, dans lequel le dispositif de fixation (10) se compose de plastique, de préférence d'un plastique élastique, de manière particulièrement préférée d'un thermoplastique ou d'un élastomère.

4. Dispositif de fixation (10) selon l'une des revendications 1 à 3,
dans lequel la première zone de fixation (12) dispose d'un trou (14, 15) conçu pour permettre une fixation à l'aide d'une vis (30), de préférence une vis à tête fraisée (30), sur un canal de vissage correspondant du rail de fixation (33), ou
dans lequel la première zone de fixation (12) dispose, sur le premier côté, d'un mamelon (61) conçu pour s'insérer dans un canal de vissage (81, 82, 83) du rail de fixation (33) et pour raccorder la première zone de fixation (12) au rail de fixation (33).

5. Dispositif de fixation (10) selon la revendication 4,
dans lequel le mamelon (61) dispose d'un moyen d'écartement (64) conçu pour s'écarter après le passage du mamelon (61) à travers le canal de vissage et pour empêcher un nouveau passage du mamelon (61) à travers le canal de vissage (81, 82, 83).

6. Dispositif de fixation (10) selon l'une des revendications 1 à 5,
dans lequel le dispositif de fixation dispose d'une deuxième zone de fixation (13) conçue pour être fixée sur le rail de fixation (33),
ledit moyen de positionnement (29) étant conçu pour maintenir, lors de la fixation de la deuxième zone de fixation (13) sur le rail de fixation (33), le module à DEL (32) entre le dispositif de fixation (10) et le rail de fixation (33).

7. Dispositif de fixation (10) selon la revendication 6,
dans lequel la première zone de fixation (12) et la deuxième zone de fixation (13) disposent respectivement d'un trou (14, 15) conçu pour permettre une fixation à l'aide de vis (30, 31), de préférence de vis à tête fraisée (30, 31), sur des canaux de vissage correspondants du rail de fixation (33), et
dans lequel les trous (14, 15) de la première zone de fixation (12) et de la deuxième zone de fixation (13) présentent de préférence un espacement leur permettant d'être conformes à la norme Zhaga, et/ou
dans lequel les trous (14, 15) disposent de préférence d'un espacement de 31 mm.

8. Dispositif de fixation (10) selon la revendication 6,
dans lequel la première zone de fixation (12) et la deuxième zone de fixation (13) disposent respectivement d'un mamelon (61, 62) conçu pour s'insérer dans un canal de vissage (81, 82, 83) du rail de fixation (33) et pour raccorder la première zone de fixation (12) et la deuxième zone de fixation (13) au rail de fixation (33), et
dans lequel les mamelons de la première zone de fixation (12) et de la deuxième zone de fixation (13) présentent de préférence un espacement qui leur permet d'être conformes à la norme Zhaga, et/ou dans lequel les mamelons (61, 62) disposent de préférence d'un espacement de 31 mm.

9. Dispositif de fixation (10) selon l'une des revendications 6 à 8,
dans lequel le dispositif de fixation (10) présente une première largeur, d'un bord externe de la première zone de fixation (12) à un bord externe de la deuxième zone de fixation (13), le module à DEL (32) présentant une deuxième largeur,
la première largeur étant supérieure à la deuxième largeur, et
le rail de fixation (33) présentant de préférence une troisième largeur qui est supérieure à la première largeur.

10. Dispositif de fixation (10) selon la revendication 9,
dans lequel la première largeur est comprise entre 25 mm et 40 mm, de préférence entre 27 mm et 37 mm, et/ou
dans lequel la deuxième largeur est comprise entre 15 mm et 35 mm, préférence entre 20 mm et 30 mm, et est, de manière particulièrement préférée, de 24 mm, et/ou
dans lequel le rail de fixation (33) présente une largeur qui est comprise entre 30 mm et 50 mm, de préférence entre 35 mm et 45 mm, et qui est, de manière particulièrement préférée, de 40 mm.

11. Dispositif de fixation (10) selon l'une des revendications 6 à 10,
dans lequel la première zone de fixation (12) et la deuxième zone de fixation (13) sont raccordées au moyen d'une traverse (11), ladite traverse (11) étant conçue pour chevaucher le module à DEL (32) et le maintenir sur le rail de fixation (33).

12. Dispositif de fixation (10) selon la revendication 11,
dans lequel le dispositif de fixation (10) est conçu pour que la traverse (11), lors de la fixation du dispositif de fixation (10) sur le rail de fixation (33), s'étende dans un espace intermédiaire entre des puces DEL (35) du module à DEL (32), ladite traverse (11) présentant une largeur qui est inférieure à la largeur de l'espace intermédiaire entre les puces DEL (35) du module à DEL (32), et/ou dans lequel la traverse (11) dispose d'une largeur de 0,5 mm à 5 mm, de préférence de 1 mm à 2 mm, et/ou
dans lequel la traverse (11) est conçue pour ne pas se trouver, lors de la fixation du dispositif de fixation (10) sur le rail de fixation (33), à l'intérieur de l'angle de rayonnement des puces DEL (35).

13. Module lumineux (60) comprenant un rail de fixation (33), un module à DEL (32) et au moins trois dispositifs de fixation (10) selon l'une des revendications 1 à 5, et
dans lequel les au moins trois dispositifs de fixation (10) sont disposés en étant répartis sur la longueur du module à DEL, alternativement sur deux côtés du module à DEL, de préférence sans être directement en regard les uns des autres.

14. Module lumineux (40) comprenant un rail de fixation (33), un module à DEL (32) et au moins deux dispositifs de fixation (10) selon la revendication 10 ou 11, dans lequel les dispositifs de fixation (10) fixent le module à DEL (32) sur le rail de fixation (33).

15. Luminaire (50, 70) comprenant une optique (41) et un module lumineux (40, 60) selon la revendication 13 ou 14, comprenant au moins un dispositif de fixation (10) selon la revendication 1, ladite optique (41) contenant un diffuseur et/ou une lentille.
